# FASCICULE DE BREVET EUROPEEN

(11) **EP 3 391 615 B1**
(45) Date de publication et mention de la délivrance du brevet: **27.01.2021**
(21) Numéro de dépôt: 16826378.8
(22) Date de dépôt: 14.12.2016
(51) Int. Cl.: H04L 29/06

(54) **PROCÉDÉ DE COMMUNICATION ENTRE UN TERMINAL APPELANT ET UNE PLURALITÉ DE TERMINAUX APPELÉS**
VERFAHREN ZUR KOMMUNIKATION ZWISCHEN EINEM ANRUFENDEN ENDGERÄT UND EINER VIELZAHL ANGERUFENER ENDGERÄTE
METHOD OF COMMUNICATION BETWEEN A CALLING TERMINAL AND A PLURALITY OF CALLED TERMINALS

(30) Priorité: 18.12.2015 FR 1562866
(43) Date de publication de la demande: 24.10.2018
(73) Titulaire: ORANGE, 75015 Paris (FR)
(72) Inventeur: DOREE, José, 22300 Lannion (FR); LE ROUZIC, Jean-Claude, 22560 Trebeurden (FR)
(86) Numéro de dépôt international: PCT/FR2016/053439
(87) Numéro de publication internationale: WO 2017/103486

(56) Documents cités:
- US-A1- 2011 314 140
- US-A1- 2013 100 958
- US-A1- 2015 055 550
- "Rich Communication Suite 5.1 Advanced Communications Services and Client Specification - Version 2.0 -pages 1-250", GSM ASSOCIATION, 3 mai 2013 (2013-05-03), pages 1-250, XP055131358,

## Description

La présente invention concerne les réseaux de communications de type IP (« *Internet Protocol* »), et notamment ceux parmi les réseaux IP qui sont aptes à mettre en œuvre des protocoles de contrôle de session évolués. Les réseaux IP permettent la diffusion de données conversationnelles, dans le cadre de services tels que « Voix sur IP » (VoIP), « Partage de Contenu », ou « Messagerie Instantanée ».

Plus particulièrement, la présente invention concerne les moyens mis en place dans un réseau IP pour permettre à l'émetteur d'une requête de savoir quels dispositifs-clients du destinataire de la requête ont reçu cette requête.

Ces « dispositifs-clients » peuvent être, par exemple, un terminal fixe ou mobile, ou une passerelle soit domestique (« *Residential Gateway »* en anglais) soit située dans une entreprise. Par souci de brièveté, on utilisera fréquemment ci-dessous le terme générique de « terminal d'utilisateur », ou de « terminal » tout court, pour désigner ces divers équipements.

Les services de communication sur réseau IP peuvent identifier des ressources physiques ou virtuelles au moyen de chaînes de caractères telles qu'une « URI » (initiales des mots anglais « *Uniform Resource Identifier »* signifiant « Identifiant Uniforme de Ressource »). La syntaxe des URIs est définie dans le document RFC 3986 de l'IETF ; la connaissance de l'URI d'une ressource permet d'obtenir l'adresse IP d'un équipement du réseau de l'opérateur gérant cette ressource. Dans la présente description, nous appellerons « URI » tout type d'identifiant de ressource applicative physique ou virtuelle accessible sur un réseau.

Les protocoles de contrôle de session évolués classiques, tels que le protocole SIP (initiales des mots anglais « *Session Initiation Protocol* » signifiant « Protocole d'Initiation de Session »), utilisent des messages dits de « signalisation », qui sont des messages permettant à un terminal de demander une connexion avec un autre terminal, ou également des messages signalant qu'une ligne téléphonique est occupée, ou signalant que le téléphone appelé sonne, ou encore signalant que tel téléphone est connecté au réseau et peut être joint de telle ou telle manière.

Le protocole SIP a été défini par l'IETF (*Internet Engineering Task Force*) dans le document RFC 3261. Ce protocole permet l'établissement, la modification et la terminaison de sessions multimédia dans un réseau utilisant le protocole IP. Le protocole SIP a ensuite été étendu notamment dans le document RFC 3265. Cette extension définit des procédures de notification d'événements.

Le protocole SIP est utilisé en particulier dans les infrastructures de type IMS (initiales des mots anglais « *IP Multimedia Subsystem* » signifiant « Sous-système Multimédia sur IP »). L'IMS a été défini par l'organisme de normalisation 3GPP (« *Third Generation Partnership Project* ») et TISPAN (« *Télécommunications and Internet Converged Services and Protocols for Advanced Networking* »). C'est une architecture de réseau introduite par le 3GPP pour les réseaux mobiles, puis reprise par TISPAN pour les réseaux fixes. Cette architecture permet l'établissement dynamique et le contrôle de sessions multimédia entre deux clients ainsi que la réservation des ressources au niveau du réseau de transport des flux multimédias. Grâce à cette architecture, les opérateurs réseau peuvent commodément mettre en œuvre une politique de gestion, fournir une Qualité de Service prédéterminée, et calculer les montants à facturer aux clients. L'IMS permet actuellement d'accéder à des services de type téléphonie, visiophonie, Présence et Messagerie Instantanée, dont elle gère aussi l'interaction.

Chaque usager d'un réseau IMS peut y être identifié au moyen de diverses identités, dont notamment l'IMPI (initiales des mots anglais « *IP Multimedia Private Identity* » signifiant « Identité Privée pour IP Multimédia ») et l'IMPU (initiales des mots anglais « *IP Multimedia PUblic identity* » signifiant « Identité Publique pour IP Multimédia »).

L'IMPI est défini dans la spécification TS 23.228 du 3GPP. L'IMPI est une identité affectée de manière permanente par l'opérateur d'un réseau à une souscription auprès de cet opérateur, et est utilisé, par exemple, pour l'enregistrement, l'autorisation d'accès, l'administration des services offerts à l'usager, et la facturation (on notera qu'un usager peut avoir plusieurs IMPI au sein de la même souscription ; on peut ainsi associer chaque IMPI à un dispositif-client différent). L'IMPI a la forme d'un NAI (initiales des mots anglais *« Network Access Identifier* » signifiant « Identifiant d'Accès Réseau »), tel que défini dans le document RFC 4282 de l'IETF.

Un usager se sert de son IMPU pour communiquer avec d'autres usagers. L'IMPU se présente sous la forme d'une URI ou d'un numéro court, ou encore d'un alias quelconque. Pour un IMPI donné, il peut y avoir plusieurs IMPU (souvent, une tel-URI et une SIP-URI). Un IMPU peut être partagé avec un autre téléphone, de manière à ce que ces téléphones puissent être tous les deux joints avec la même identité (par exemple, un numéro de téléphone unique pour toute une famille d'usagers). Ces identités sont configurées par l'opérateur lors de la création par un usager d'un compte auprès de cet opérateur, et exploitées lors de l'enregistrement d'un dispositif-client de l'usager sur le réseau.

Lorsque donc un usager souhaite bénéficier des services offerts par un réseau IMS, il émet vers le réseau des messages de signalisation pouvant inclure notamment divers types de requêtes.

Tout d'abord, le dispositif-client de l'usager doit, sauf exceptions (telles que certains appels d'urgence), s'enregistrer sur le réseau. Lorsque le réseau est incapable de faire le lien entre cet enregistrement et un enregistrement précédent (par exemple suite à une panne réseau, ou suite à un arrêt du dispositif-client pendant une durée supérieure à une valeur prédéterminée), l'enregistrement est considéré comme étant un enregistrement initial. Après un enregistrement initial, le dispositif-client de l'usager doit envoyer périodiquement au réseau une requête pour confirmer qu'il souhaite maintenir son enregistrement.

Pour pouvoir enregistrer les dispositifs-clients, les réseaux IMS comprennent un ou plusieurs serveurs d'enregistrement, appelés « S-CSCF » (initiales des mots anglais « *Serving-Call Server Control Function* » signifiant « Fonction de Commande de Session d'Appel Serveuse »), aptes (entre autres fonctions) à gérer la procédure d'enregistrement des dispositifs connectés au réseau.

Les réseaux IMS comprennent en outre un ou plusieurs serveurs d'interrogation, appelés « I-CSCF » (initiales des mots anglais « *Interrogating-Call Server Control Function* » signifiant « Fonction de Commande de Session d'Appel Interrogatrice ») - d'ailleurs souvent combinés physiquement avec les serveurs d'enregistrement S-CSCF pour constituer des serveurs d'appel dénotés « I/S-CSCF » - qui, au moment de l'enregistrement d'un dispositif-client, interrogent un serveur de données d'abonné appelé « HSS » (initiales des mots anglais « *Home Subscriber Server* » signifiant « Serveur d'Abonné de Rattachement »), afin de pouvoir sélectionner un serveur S-CSCF possédant les caractéristiques qui sont obligatoirement (et, le cas échéant, optionnellement) requises pour atteindre le niveau de service souscrit par l'usager. Les serveurs HSS contiennent chacun une base de données-clients, et sont donc l'équivalent dans les réseaux IP des serveurs « HLR » (initiales des mots anglais « *Home Location Register* » signifiant « Registre de Localisation de Rattachement ») utilisés dans les réseaux GSM. Chaque serveur HSS contient le « profil » d'un certain nombre de dispositifs-clients du réseau, ce profil comprenant leur état d'enregistrement, des données d'authentification et de localisation, et les services auxquels il a droit.

En effet, après qu'un serveur S-CSCF lui a été ainsi attribué, chaque utilisateur peut faire usage d'un certain nombre de services pendant la session en cours. Il peut par exemple s'agir de services offerts automatiquement à tous les utilisateurs du réseau IMS. Il peut aussi s'agir de services auxquels cet utilisateur a souscrit auprès de l'opérateur du réseau, et qui sont mis automatiquement à sa disposition. Enfin, il peut s'agir de services dont l'utilisateur peut faire usage après avoir émis une requête appropriée (SIP SUBSCRIBE).

Ces services comprennent des applications audiovisuelles telles que mentionnées ci-dessus. Il peut s'agir également d'une souscription à l'état d'une ressource, auquel cas des notifications d'événement (SIP NOTIFY) sont envoyées au dispositif-client dès lors que l'état de la ressource change ; par exemple, lorsque l'utilisateur d'un dispositif-client dispose d'une boîte vocale sur le réseau, il pourra être informé chaque fois qu'un message a été enregistré sur cette boîte vocale ; un utilisateur peut, de même, demander à être notifié de l'état d'enregistrement de son propre dispositif-client.

Les réseaux IMS comprennent en outre un ou plusieurs serveurs appelés « P-CSCF » (initiales des mots anglais « *Proxy-Call Server Control Function »* signifiant « Fonction de Commande de Session d'Appel Mandataire »). Pour chaque dispositif-client connecté à un réseau IMS, il existe un serveur P-CSCF servant d'entité de raccordement entre le cœur de réseau IMS et le réseau d'accès utilisé par ce dispositif-client ; ainsi, toute la signalisation SIP échangée entre le dispositif-client d'une part, et le serveur d'interrogation I-CSCF ou le serveur d'enregistrement S-CSCF d'autre part, passe par le serveur P-CSCF.

Lorsqu'un premier usager (dit « appelant ») émet une requête à destination d'un second usager (dit « appelé »), l'appelant ne connaît pas (en général) les capacités du terminal de l'appelé, ou les capacités des terminaux de l'appelé lorsque ce dernier possède plusieurs terminaux (ces terminaux sont habituellement associés chacun à un IMPI respectif, mais à un unique IMPU commun). Par « capacités d'un terminal », on entend, dans le cadre de la présente invention, la capacité technique de ce terminal à participer à la fourniture d'un service particulier, par exemple un service téléphonique, ou un service de Voix Haute Définition (HD), ou un service vidéo, ou encore un service de messagerie instantanée.

Or la connaissance de ces capacités techniques serait fort utile à l'appelant, car cela lui permettrait de savoir :
1) si l'un des terminaux de l'appelé possède des capacités suffisantes pour le service souhaité par l'appelant, et
2) s'il existe un tel terminal, l'identité de ce terminal ou comment le joindre.

Supposons par exemple qu'un appelant émette une requête SIP MESSAGE (laquelle, conformément au document RFC 3428 de l'IETF, propose un échange de messages instantanés). Si l'appelé possède plusieurs terminaux connectés à ce moment au réseau IP, et que l'un de ces terminaux dispose, en plus de la capacité d'échanger des messages instantanés, de la capacité de transférer des fichiers http, il serait fort utile à l'appelant d'en être informé, car un tel transfert de fichier pourrait être souhaitable dans la suite de la session.

On connaît dans l'état de l'art diverses propositions visant à résoudre ce problème.

On connaît en particulier des solutions à base de « serveurs d'applications » agrégeant les capacités de chacun des terminaux connectés d'un usager. Mais ces solutions ne reflètent pas les capacités de chacun des terminaux connectés à un instant donné, car c'est l'agrégation des capacités de l'ensemble des terminaux qui est présentée, et non les capacités individuelles de chacun des terminaux.

D'autres solutions, à base de « bifurcation » (« *forking* » en anglais), c'est-à-dire de transmission d'un signal de contrôle à une pluralité de terminaux destinataires (décrite dans la Série 6 de normes du 3GPP), permettent d'explorer les capacités d'une partie au moins des terminaux connectés, en leur envoyant une requête dédiée. On rappelle à cet égard (cf. la Section §16.5 du document RFC 3261 précité, et la Section §7 du document RFC 3841 de l'IETF) qu'il existe deux procédures de bifurcation possibles, l'une appelée « bifurcation parallèle », et l'autre « bifurcation séquentielle », selon l'ordre de transmission dudit signal de contrôle auxdits terminaux destinataires.

Par exemple, la demande US 2011/314140 propose un procédé pour le traitement d'une requête de capacité dans un réseau IMS. Selon ce procédé, un serveur mandataire (« *proxy* » en anglais) reçoit, de la part d'un « appelant », un message SIP OPTIONS destiné à un « appelé » (selon le document RFC 3261 précité, une requête SIP OPTIONS permet à un agent SIP de demander à un autre agent SIP de lui fournir ses capacités). Le serveur mandataire fait suivre la requête à une pluralité de terminaux dudit appelé, et reçoit une réponse (SIP 200 OK) de la part d'au moins un de ces terminaux. Chaque réponse reçue, qui inclut une identité du terminal répondant ainsi qu'une indication des capacités du terminal répondant, est mise en mémoire. Le serveur mandataire confectionne ensuite un message de réponse contenant les identités et les capacités de tous les terminaux répondants. Enfin, ce message de réponse est envoyé à l'appelant. Ce procédé est ainsi conforme aux Sections 11.2 et 16.7 du document RFC 3261 précité, lesquelles prescrivent qu'un serveur mandataire ayant effectué une bifurcation ne peut envoyer qu'une seule réponse SIP 200 OK à un appelant.

Le procédé selon la demande US 2011/314140 présente toutefois plusieurs inconvénients.

Un premier inconvénient est que la procédure d'agrégation et de stockage temporaire des réponses dans le serveur mandataire requiert des ressources importantes.

Un deuxième inconvénient est que ce procédé impose à l'appelant un délai considérable avant de recevoir les capacités demandées.

Un troisième inconvénient est que l'appelant n'a aucune garantie que *tous* les terminaux de l'appelé connectés au réseau IP ont reçu la requête (et ont donc répondu par un message SIP 200 OK). Ce problème se pose avec acuité, par exemple, dans le cas où un appelant émet une requête SIP OPTIONS ou une requête SIP INFO afin de connaître le nombre de terminaux de l'appelé ainsi que leurs caractéristiques ; ce mécanisme est par exemple utilisé dans les services RCS (initiales des mots anglais « *Rich Communication Suite* » signifiant « Services de Communication Riches »). Selon un autre exemple, ce problème se pose également avec acuité dans le cas où un appelant souhaite diffuser une certaine information à *tous* les terminaux connectés d'un certain appelé, par exemple pour envoyer, au moyen d'une requête SIP MESSAGE, un message d'alerte à l'ensemble de ces terminaux, ou pour souscrire, au moyen d'une requête SIP SUBSCRIBE, à un événement particulier (par exemple, géolocalisation ou présence) concernant l'ensemble de ces terminaux.

Le document US2015/055550 décrit un procédé permettant à un utilisateur d'obtenir les capacités d'une pluralité de terminaux enregistrés auprès d'un service IMS pour un autre utilisateur.

La présente invention concerne donc, selon un premier aspect, un procédé de communication entre un premier usager d'un réseau IP (Internet Protocol) et un second usager dudit réseau IP, selon la revendication 1. Ledit procédé comprend lorsque ledit second usager a plusieurs dispositifs-clients connectés au réseau IP, les étapes suivantes :
a) un dispositif-client dudit premier usager émet une requête à destination dudit second usager,
b) un serveur mandataire du second usager met en œuvre une procédure, dite de bifurcation, consistant à transmettre ladite requête à tous lesdits dispositifs-clients du second usager,
c) au moins un des dispositifs-clients du second usager émet une réponse à la requête du premier usager, et
d) chacune desdites réponses est interceptée par ledit serveur mandataire.

Ledit procédé est remarquable en ce qu'il comprend en outre l'étape suivante :
e) le serveur mandataire transmet chacune desdites réponses au premier usager sans attendre d'éventuelles autres réponses, après y avoir inséré au moins les informations suivantes :
- une indication, explicite ou implicite, du nombre total de dispositifs-clients du second usager à qui la requête a été transmise lors de ladite étape b), et
- une indication, explicite ou implicite, du nombre de réponses émises jusque-là par un ou plusieurs dispositifs-clients du second usager.

Grâce à ces dispositions, le premier usager est rapidement en mesure de savoir quels dispositifs-clients du second usager ont bien reçu sa requête. De plus, comme (de manière connue en soi), chaque réponse contient un identifiant unique du dispositif-client répondant (par exemple, dans le protocole SIP, le paramètre « sip.instance » défini dans le document RFC 5626 de l'IETF ou l'identifiant de ressource « GRUU » défini dans le document RFC 5627 de l'IETF), le premier usager pourra ensuite (s'il le souhaite) adresser un message à tel ou tel parmi les dispositifs-clients du second usager.

Selon des caractéristiques particulières, lesdites informations insérées dans une réponse donnée comprennent en outre l'ordre de parcours de la bifurcation à destination des dispositifs-clients du second usager, en termes de bifurcation parallèle et/ou de bifurcation séquentielle.

Grâce à ces dispositions, l'appelant peut, suite à la réception de la première réponse, estimer le temps qu'il lui faudra attendre avant de recevoir les autres réponses. En effet, comme il est connu de l'Homme du Métier, une bifurcation séquentielle prend plus de temps qu'une bifurcation parallèle.

Selon des caractéristiques encore plus particulières, lesdites informations insérées dans une réponse donnée comprennent en outre l'ordre des réponses émises jusque-là par un ou plusieurs dispositifs-clients du second usager, en termes de bifurcation parallèle et/ou de bifurcation séquentielle.

Selon d'autres caractéristiques encore plus particulières, lesdites informations insérées dans une réponse donnée comprennent en outre l'ordre de parcours de ladite bifurcation à destination des dispositifs-clients du second usager, en termes d'identifiants uniques de ces dispositifs-clients.

Selon un deuxième aspect, l'invention concerne divers dispositifs.

Elle concerne ainsi, premièrement, un serveur mandataire dans un réseau IP (Internet Protocol), selon la revendication 5. Ledit serveur mandataire comprend des moyens pour :
- recevoir une requête émise par un dispositif-client d'un premier usager dudit réseau IP à destination d'un second usager du réseau IP,
- lorsque ledit second usager a plusieurs dispositifs-clients connectés au réseau IP, mettre en œuvre une procédure, dite de bifurcation, consistant à transmettre ladite requête à tous lesdits dispositifs-clients du second usager, et
- intercepter chaque réponse à la requête du premier usager émise par un dispositif-client du second usager.
Ledit serveur mandataire est remarquable en ce qu'il comprend en outre des moyens pour transmettre chacune desdites réponses au premier usager sans attendre d'éventuelles autres réponses, après y avoir inséré au moins les informations suivantes :
- une indication, explicite ou implicite, du nombre total de dispositifs-clients du second usager à qui la requête a été transmise lors de ladite procédure de bifurcation, et
- une indication, explicite ou implicite, du nombre de réponses émises jusque-là par un ou plusieurs dispositifs-clients du second usager.

Selon des caractéristiques particulières, lesdites informations insérées dans une réponse donnée comprennent en outre l'ordre de parcours de ladite bifurcation à destination des dispositifs-clients du second usager, en termes de bifurcation parallèle et/ou de bifurcation séquentielle.

Selon des caractéristiques encore plus particulières, lesdites informations insérées dans une réponse donnée comprennent en outre l'ordre des réponses émises jusque-là par un ou plusieurs dispositifs-clients du second usager, en termes de bifurcation parallèle et/ou de bifurcation séquentielle.

Selon d'autres caractéristiques encore plus particulières, lesdites informations insérées dans une réponse donnée comprennent en outre l'ordre de parcours de la bifurcation à destination des dispositifs-clients du second usager, en termes d'identifiants uniques de ces dispositifs-clients, l'identifiant unique de chacun de ces dispositifs-clients ayant été fourni par ce dispositif-client au serveur mandataire, ou construit pour ce dispositif-client par le serveur mandataire.

Selon d'autres caractéristiques particulières, ledit serveur mandataire comprend en outre des moyens pour n'insérer lesdites informations dans lesdites réponses que lorsqu'il constate que ladite requête reçue de la part du premier usager comprend un indicateur dédié dans un en-tête dédié.

L'invention concerne aussi, un système de communication, tel que défini plus en détail dans la revendication 11.

Selon des caractéristiques particulières, lesdites informations prises en compte dans une réponse donnée comprennent en outre l'ordre de parcours de ladite bifurcation à destination des dispositifs-clients du second usager, en termes de bifurcation parallèle et/ou de bifurcation séquentielle.

Selon des caractéristiques encore plus particulières, lesdites informations prises en compte dans une réponse donnée comprennent en outre l'ordre des réponses émises jusque-là par les dispositifs-clients du second usager, en termes de bifurcation parallèle et/ou de bifurcation séquentielle.

Selon d'autres caractéristiques encore plus particulières, lesdites informations prises en compte dans une réponse donnée comprennent en outre l'ordre de parcours de ladite bifurcation à destination des dispositifs-clients du second usager, en termes d'identifiants uniques de ces dispositifs-clients.

Selon d'autres caractéristiques particulières, ledit dispositif-client comprend en outre des moyens pour insérer dans ladite requête un indicateur dédié dans un en-tête dédié, ledit indicateur dédié indiquant que ce dispositif-client comprend lesdits moyens pour prendre en compte lesdites informations.

L'invention concerne aussi, troisièmement, un serveur *stateful* non revendiqué. Ledit serveur *stateful* est remarquable en ce qu'il comprend des moyens pour, lorsqu'il placé sur le chemin de signalisation entre le dispositif-client d'un premier usager et le serveur mandataire en charge d'un second usager d'un réseau IP :
- transférer une requête émise par ledit dispositif-client du premier usager vers ledit serveur mandataire en charge du second usager, et
- transférer au dispositif-client du premier usager une pluralité de réponses respectives à ladite requête émises par une pluralité de dispositifs-clients respectifs du second usager.

En effet, de manière classique (cf. Sections 16.2 et 17 du document RFC 3261 précité), certains nœuds situés sur le chemin de signalisation entre un premier usager et un second usager d'un réseau IP sont aptes à suivre la progression du traitement d'une requête émise par le premier usager à destination du second usager : de tels nœuds sont appelés « serveurs *stateful* ». Or, bien que cela ne soit pas prescrit par le document RFC 3261 ou par une norme quelconque, ces serveurs *stateful* sont habituellement configurés conformément aux Sections 11.2 et 16.7 de ce document mentionnées ci-dessus, c'est-à-dire qu'ils ne peuvent pas transmettre au premier usager plus d'une réponse émise par le second usager. C'est pourquoi, pour permettre la mise en œuvre de la présente invention, les serveurs *stateful* situés sur le chemin de signalisation entre le premier usager et le serveur en charge de la bifurcation pour le second usager doivent être configurés de manière à laisser passer (le cas échéant) une *pluralité* de réponses à une requête.

Les avantages offerts par ces dispositifs sont essentiellement les mêmes que ceux offerts par les procédés corrélatifs succinctement exposés ci-dessus.

On notera qu'il est possible de réaliser ces dispositifs dans le contexte d'instructions logicielles et/ou dans le contexte de circuits électroniques.

L'invention vise également un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour l'exécution des étapes du procédé de communication succinctement exposé ci-dessus, lorsqu'il est exécuté sur un ordinateur.

Les avantages offerts par ce programme d'ordinateur sont essentiellement les mêmes que ceux offerts par ledit procédé.

D'autres aspects et avantages de l'invention apparaîtront à la lecture de la description détaillée ci-dessous de modes de réalisation particuliers, donnés à titre d'exemples non limitatifs. La description se réfère aux figures qui l'accompagnent, dans lesquelles :
- la figure 1 représente schématiquement un système pour la fourniture de services multimédia apte à mettre en œuvre l'invention, et
- la figure 2 représente un premier exemple de mise en œuvre de l'invention, dans lequel un usager d'un réseau IMS IP émet une requête OPTIONS, et
- la figure 3 représente un deuxième exemple de mise en œuvre de de l'invention, dans lequel un usager d'un réseau IMS IP émet une requête SUBSCRIBE.

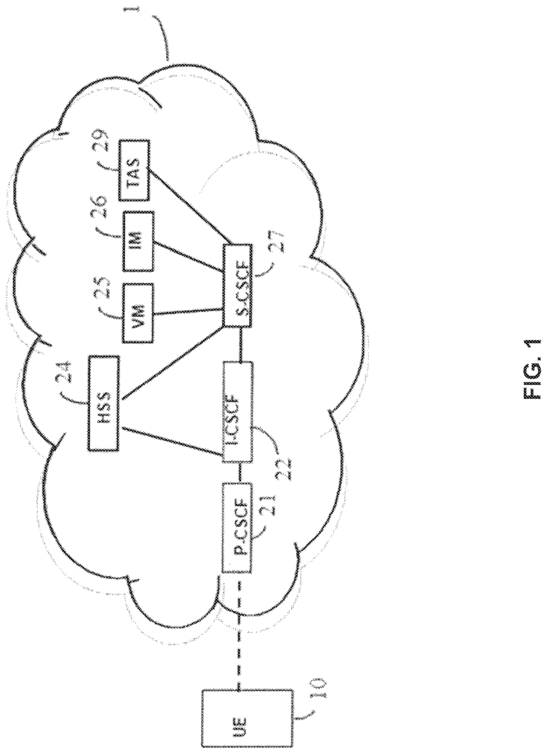

Bien que la présente invention concerne les réseaux IP en général, on va considérer à présent, à titre d'exemple de réalisation, une architecture de réseau de type IMS, telle que présentée succinctement ci-dessus. Cette architecture est illustrée sur la **figure 1****.**

Les services multimédia offerts par ce réseau IMS 1 peuvent comprendre des services de téléphonie, de vidéo-téléphonie, de partage de contenu (« *content-sharing* » en anglais), de Présence, de Messagerie Instantanée, ou de télévision. Ces services sont à la disposition de l'utilisateur d'un dispositif-client (« *User Equipment* », ou UE en anglais) 10 appartenant au réseau 1, qui permet au dispositif-client 10 d'échanger des flux multimédias et des signaux de contrôle de session conformes au protocole SIP, par exemple avec le dispositif-client (non représenté) d'un usager appartenant à un réseau SIP (non représenté) relié au réseau 1.

Le dispositif-client 10 peut être un terminal fixe ou mobile, ou une passerelle domestique ou d'entreprise, disposant de moyens de signalisation SIP et pouvant comprendre des moyens de restitution d'un contenu audiovisuel.

Comme le montre la figure 1, ce réseau IMS 1 comprend, outre une infrastructure de transport IP (non représentée) :
- au moins un serveur S-CSCF ; le serveur S-CSCF 27 gère notamment la procédure d'enregistrement des dispositifs connectés au réseau 1 ; le serveur S-CSCF 27 gère également le routage de la signalisation entre le dispositif-client 10 et les serveurs de messagerie vocale VM 25, de Messagerie Instantanée 26, et de téléphonie TAS 29 ;
- au moins un serveur I-CSCF ; le serveur I-CSCF 22 gère notamment le routage en direction d'autres terminaux gérés par le même réseau IMS 1 et le routage de la signalisation entre ce réseau IMS 1 et d'autres réseaux (non représentés) ;
- au moins un serveur P-CSCF ; le serveur P-CSCF 21 sert d'entité de raccordement entre le cœur de réseau IMS et le réseau d'accès utilisé par le dispositif-client 10 ;
- au moins un serveur de base de données, de type HSS ; le serveur HSS 24 contient le profil de l'utilisateur du dispositif-client 10 en termes de données d'authentification et de localisation, et de services souscrits ;
- au moins un serveur VM 25 de messagerie vocale (« *message-summary* » en anglais) ; le serveur VM 25 gère la souscription du dispositif-client 10 aux événements de dépôt/consultation des messages à l'intention du dispositif-client 10, et notifie le dispositif-client 10 lors de l'occurrence de ces événements ;
- au moins un serveur de Messagerie Instantanée IM 26 ; en cas de souscription de l'utilisateur de l'UE 10 au service de Messagerie Instantanée, cet utilisateur peut dialoguer « instantanément » en ligne avec d'autres abonnés à ce service ; et
- au moins un serveur de téléphonie TAS 29 ; le serveur TAS gère les services téléphoniques auxquels l'utilisateur du terminal 10 a souscrits auprès de son opérateur, tels que la présentation du numéro ou le renvoi d'appel.

Les serveurs de messagerie vocale VM 25, de Messagerie Instantanée IM 26, et de téléphonie TAS 29 sont des exemples de Serveurs d'Applications (AS).

Certains services, comme ceux du serveur VM 25 et du serveur de Messagerie Instantanée IM 26, s'appuient sur la souscription du terminal 10 à des événements prédéterminés, comme expliqué ci-dessus.

On va décrire à présent plusieurs modes de réalisation de l'invention, dans lesquels on suppose qu'un usager A d'un réseau IMS émet une requête vers un autre usager B du même réseau IMS.

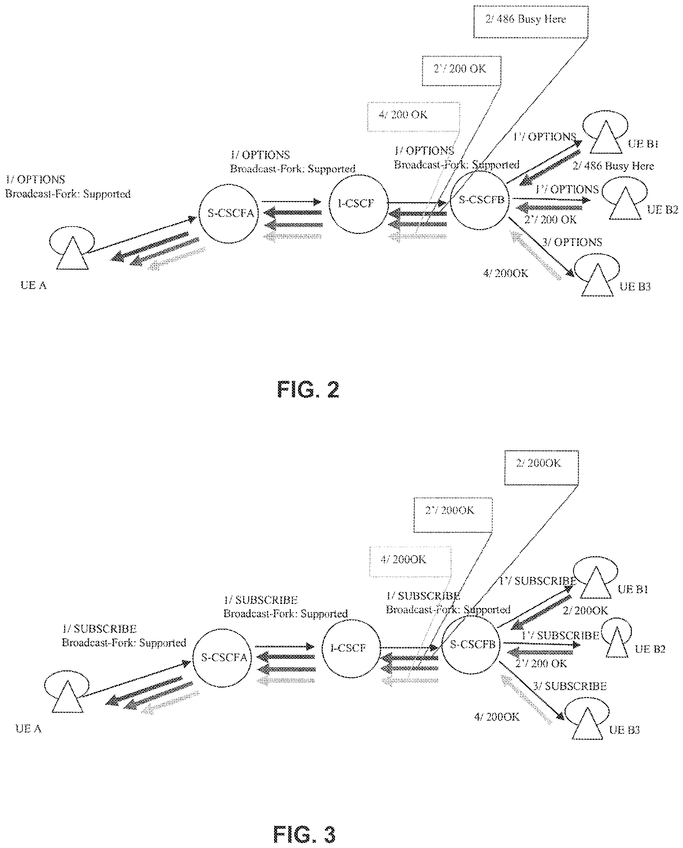

Dans le cadre d'un premier exemple, illustré sur la **figure 2****,** on met en œuvre, selon un premier mode de réalisation, les étapes suivantes.

Lors d'une étape E1, l'usager A émet une requête OPTIONS à destination de l'usager B. Cette requête contient un en-tête (« *header* » en anglais) dédié à la mise en œuvre de la présente invention, et que l'on appellera « Broadcast-Fork » ; cet en-tête contient en l'occurrence la mention « supported », qui indique que l'usager A est capable de mettre en œuvre l'invention. De plus, optionnellement, l'usager A peut indiquer dans sa requête (par exemple au moyen d'un en-tête « Request-Disposition: parallel ») qu'il souhaite que la bifurcation mise en œuvre par le serveur mandataire de l'usager B soit spécifiquement une bifurcation *parallèle* (car plus rapide qu'une bifurcation séquentielle).

Lors d'une étape E2, la requête OPTIONS transite classiquement jusqu'au serveur S-CSCF de B.

Lors d'une étape E3, le serveur S-CSCF de l'usager B met en œuvre (de manière classique en soi) une procédure de bifurcation vers l'ensemble des terminaux connectés de B, à savoir les terminaux B1, B2 et B3. Plus précisément, on supposera dans le présent exemple que l'usager A n'a pas déclaré de préférence, et que le serveur S-CSCF de l'usager B met en œuvre une bifurcation parallèle vers les terminaux B1 et B2 (flèches « 1'/OPTIONS » sur la figure 2), puis une bifurcation séquentielle vers le terminal B3 (flèche « 3/OPTIONS » sur la figure 2).

Lors d'une étape E4, chacun de ces terminaux émet une réponse respective à la requête OPTIONS contenant ses capacités techniques respectives ; par exemple, la réponse du terminal B1 est constituée par un signal « 486 Busy » (occupé) (désigné par « 2/ » sur la figure), la réponse du terminal B2 est constituée par un signal « 200 OK » (désigné par « 2'/ » sur la figure 2), et la réponse du terminal B3 est constituée elle aussi par un signal « 200 OK » (désigné par « 4/ » sur la figure 2).

Lors d'une étape E5, le serveur S-CSCF de l'usager B intercepte lesdites réponses.

Lors d'une étape E6, le serveur S-CSCF de l'usager B, prenant à nouveau en compte l'indicateur « supported » de l'en-tête Broadcast-Fork de la requête émise par l'usager A, fait suivre chaque réponse à l'usager A après avoir enrichi cette réponse, sans attendre d'éventuelles autres réponses. On notera que ce comportement du serveur S-CSCF (ou, plus généralement, de tout serveur mandataire selon l'invention) diffère du comportement classique, dans lequel (comme mentionné plus haut), un serveur mandataire ne renvoie à l'émetteur d'une requête qu'une seule réponse (200 OK), et ce, quel que soit le nombre de terminaux destinataires ayant répondu à la requête.

Dans le présent mode de réalisation, chaque réponse respectivement reçue par le S-CSCF de la part d'un terminal de l'usager B est enrichie en insérant, par exemple dans l'en-tête Broadcast-Fork, les informations suivantes :
- le cas échéant, un indicateur « required » pour confirmer à l'usager A que sa demande de bifurcation a bien été prise en compte ;
- optionnellement, une indication explicite du nombre total de terminaux de l'usager B visés lors de la bifurcation ;
- une première mention indiquant l'ordre de parcours de bifurcation effectué ; et
- une seconde mention indiquant l'ordre des réponses reçues jusque-là par le serveur S-CSCF par rapport à la bifurcation effectuée.

Dans l'exemple considéré :
- le nombre total de terminaux sera : « count=3 »,
- ladite première mention sera du type :
   « fork: parallel=2, sequential=1 »
(i.e., une bifurcation parallèle vers deux terminaux suivi d'une bifurcation séquentielle vers le troisième terminal), et
- ladite seconde mention sera du type :
   - dans la réponse du terminal B1 : « response: parallel=1 » (impliquant qu'une seule réponse a été reçue jusque-là par le serveur S-CSCF de l'usager B),
   - dans la réponse du terminal B2 : « response: parallel=2 » (impliquant que deux réponses ont été reçues jusque-là), et
   - dans la réponse du terminal B3 : « response: parallel=2, sequential=1 » (impliquant que les trois réponses ont été reçues).

Enfin, lors d'une étape E7, l'usager A reçoit ces réponses enrichies.

L'usager A est ainsi rapidement en mesure de vérifier que tous les terminaux de l'usager B ont bien reçu sa requête OPTIONS (3 réponses reçues pour 3 cibles de la bifurcation). De plus, après avoir reçu la réponse du terminal B3, l'usager A peut constater que la transaction est terminée (alors que, selon l'art antérieur, cette constatation est fondée sur la réception d'une unique réponse 200 OK). Enfin, l'usager A peut, au besoin, prendre connaissance des capacités techniques de chacun de ces terminaux.

Dans le cadre d'un deuxième exemple, illustré sur la **figure 3****,** on met en œuvre, toujours selon le premier mode de réalisation, les étapes suivantes.

Lors d'une étape E'1, l'usager A émet une requête SUBSCRIBE à destination de l'usager B. Par exemple, l'usager A pourrait souscrire à un évènement de notification de présence. Avantageusement, l'émission d'une seule requête permet de souscrire simultanément à l'ensemble des évènements de tous les terminaux de B.

De manière analogue au premier exemple, cette requête SUBSCRIBE contient :
- un en-tête « Broadcast-Fork » selon l'invention, cet en-tête contenant la mention « supported » pour indiquer que l'usager A est capable de mettre en œuvre l'invention, ainsi que
- optionnellement, un en-tête « Request-Disposition: parallel ») indiquant que l'usager A souhaite que le serveur mandataire de l'usager B mette en œuvre une bifurcation parallèle.

Lors d'une étape E'2, la requête SUBSCRIBE transite classiquement jusqu'au serveur S-CSCF de B.

Lors d'une étape E'3, le serveur S-CSCF de l'usager B met en œuvre une procédure de bifurcation vers l'ensemble des terminaux connectés de B, à savoir les terminaux B1, B2 et B3. On supposera à nouveau dans le présent exemple que le serveur S-CSCF de l'usager B met en œuvre une bifurcation parallèle vers les terminaux B1 et B2 (flèches « 1'/SUBSCRIBE » sur la figure 3), puis une bifurcation séquentielle vers le terminal B3 (flèche « 3/SUBSCRIBE » sur la figure 3).

Lors d'une étape E'4, ces trois terminaux émettent chacun une réponse à la requête SUBSCRIBE ; ces réponses sont constituées, par exemple, par des signaux « 200 OK » (désignés par « 2/ », « 2'/ » et « 4/ » sur la figure 3).

Les étapes E'5, E'6 et E'7 sont respectivement analogues aux étapes E5, E6 et E7 décrites ci-dessus en référence au premier exemple.

L'usager A est ainsi rapidement en mesure de vérifier que tous les terminaux de l'usager B ont bien reçu sa requête SUBSCRIBE (trois réponses reçues pour trois cibles de la bifurcation), et qu'il bénéficie en conséquence d'une souscription auprès de chacun de ces terminaux.

Selon un deuxième mode de réalisation, chaque réponse respectivement reçue par le S-CSCF de la part d'un terminal de l'usager B est enrichie en insérant, par exemple dans un en-tête « Broadcast-Fork », les informations suivantes :
- le cas échéant, un indicateur « required » pour confirmer à l'usager A que sa demande de bifurcation a bien été prise en compte ;
- optionnellement, une indication explicite du nombre total de terminaux de l'usager B visés lors de la bifurcation ; et
- une mention indiquant l'ordre de parcours de bifurcation effectué, enrichi de l'identifiant unique de chacun des terminaux.

Cet identifiant unique inséré par le S-CSCF dans la réponse sera de préférence celui fourni par le terminal lui-même (par exemple, dans le protocole SIP, le paramètre sip.instance ou l'identifiant de ressource GRUU mentionnés ci-dessus) lors de son enregistrement sur le réseau ; si le terminal n'a fourni aucun identifiant unique, l'identifiant unique inséré par le S-CSCF dans la réponse pourra, selon une caractéristique particulière de la présente invention, être construit pour ce terminal par le S-CSCF.

Ainsi, dans le cadre d'exemples de mise en œuvre analogues aux exemples décrits ci-dessus en référence au premier mode de réalisation :
- le nombre total de terminaux sera « count=3 », et
- ladite mention sera du type :
   « fork: parallel=2, sip.instance=UE1, sip.instance=UE2 ; sequential=1, sip.instance=UE3 ».

L'usager A pourra ainsi, par comparaison avec les identifiants uniques des terminaux dans l'ordre de la bifurcation, positionner le dernier terminal ayant répondu, et savoir en particulier si l'un de ces terminaux n'est plus connecté au réseau.

On notera que, dans les modes de réalisation décrits ci-dessus, l'information de la capacité de l'usager A à mettre en œuvre l'invention, et les informations insérées par le serveur S-CSCF de l'usager B dans la, ou les, réponses des terminaux de l'usager B ont été véhiculés dans un en-tête dédié (Broadcast-Fork). Mais d'autres formats sont évidemment possibles pour véhiculer ces diverses informations. Ainsi, en variante, ces informations peuvent être véhiculés dans le corps de message (« *body xml* » en anglais) de la requête émise par l'usager A et/ou de la, ou des, réponses à cette requête.

De manière générale, la présente invention peut être mise en œuvre au sein des nœuds d'un réseau IP, par exemple des serveurs mandataires, des dispositifs-clients ou des serveurs *stateful,* au moyen de composants logiciels et/ou matériels.

Les composants logiciels pourront être intégrés à un programme d'ordinateur classique de gestion de nœud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en œuvre de l'un quelconque des procédés de communication selon l'invention.

En effet, l'invention vise aussi un programme d'ordinateur téléchargeable depuis un réseau de communication comprenant des instructions pour l'exécution des étapes d'un procédé de communication selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations, inamovible, ou partiellement ou totalement amovible, lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comprendre un moyen de stockage, tel qu'une ROM, par exemple un CD ROM ou une ROM de circuit microélectronique, ou un moyen d'enregistrement magnétique, tel qu'un disque dur, ou encore une clé USB (« *USB flash drive* » en anglais).

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme est incorporé, le circuit étant adapté pour exécuter ou pour être utilisé dans l'exécution de l'un quelconque des procédés de communication selon l'invention.

## Revendications

1. Procédé de communication entre un premier usager d'un réseau Internet Protocol, IP, et un second usager dudit réseau IP, ledit procédé comprenant, lorsque ledit second usager a plusieurs dispositifs-clients connectés au réseau IP, les étapes suivantes :
a) un dispositif-client dudit premier usager émet (E1, E'1) une requête (OPTIONS, SUBSCRIBE) à destination dudit second usager,
b) un serveur mandataire du second usager met en œuvre une procédure, dite de bifurcation, consistant à transmettre (E3, E'3) ladite requête à tous lesdits dispositifs-clients du second usager,
c) au moins un des dispositifs-clients du second usager émet une réponse (E4, E'4) à la requête du premier usager, et
d) chacune desdites réponses est interceptée (E5, E'5) par ledit serveur mandataire,
**caractérisé en ce qu'**il comprend en outre l'étape suivante :
e) le serveur mandataire transmet (E6, E'6) chacune desdites réponses interceptées au premier usager sans attendre d'éventuelles autres réponses, chaque réponse étant transmise par le serveur mandataire après que le serveur mandataire a inséré dans ladite réponse au moins les informations suivantes :
• une indication, explicite ou implicite, du nombre total de dispositifs-clients du second usager à qui la requête a été transmise lors de ladite étape b), et
• une indication, explicite ou implicite, du nombre de réponses émises jusque-là par un ou plusieurs dispositifs-clients du second usager et reçues par ledit serveur mandataire.

2. Procédé de communication selon la revendication 1, **caractérisé en ce que** lesdites informations insérées dans une réponse donnée comprennent en outre l'ordre de parcours de la bifurcation à destination des dispositifs-clients du second usager, en termes de bifurcation parallèle et/ou de bifurcation séquentielle.

3. Procédé de communication selon la revendication 2, **caractérisé en ce que** lesdites informations insérées dans une réponse donnée comprennent en outre l'ordre des réponses émises jusque-là par un ou plusieurs dispositifs-clients du second usager, en termes de bifurcation parallèle et/ou de bifurcation séquentielle.

4. Procédé de communication selon la revendication 2, **caractérisé en ce que** lesdites informations insérées dans une réponse donnée comprennent en outre l'ordre de parcours de ladite bifurcation à destination des dispositifs-clients du second usager, en termes d'identifiants uniques de ces dispositifs-clients.

5. Serveur mandataire adapté à fonctionner dans un réseau Internet Protocol, IP, comprenant des moyens pour :
- recevoir une requête (OPTIONS, SUBSCRIBE) émise par un dispositif-client d'un premier usager dudit réseau IP à destination d'un second usager du réseau IP,
- lorsque ledit second usager a plusieurs dispositifs-clients connectés au réseau IP, mettre en œuvre une procédure, dite de bifurcation, consistant à transmettre ladite requête à tous lesdits dispositifs-clients du second usager, et
- intercepter chaque réponse à la requête du premier usager émise par un dispositif-client du second usager,
**caractérisé en ce qu'**il comprend en outre des moyens pour transmettre chacune desdites réponses au premier usager sans attendre d'éventuelles autres réponses, chaque réponse étant transmise par le serveur mandataire après que le serveur mandataire a inséré dans ladite réponse au moins les informations suivantes :
• une indication, explicite ou implicite, du nombre total de dispositifs-clients du second usager à qui la requête a été transmise lors de ladite procédure de bifurcation, et
• une indication, explicite ou implicite, du nombre de réponses émises jusque-là par un ou plusieurs dispositifs-clients du second usager et reçues par ledit serveur mandataire.

6. Serveur mandataire selon la revendication 5, **caractérisé en ce que** lesdites informations insérées dans une réponse donnée comprennent en outre l'ordre de parcours de ladite bifurcation à destination des dispositifs-clients du second usager, en termes de bifurcation parallèle et/ou de bifurcation séquentielle.

7. Serveur mandataire selon la revendication 6, **caractérisé en ce que** lesdites informations insérées dans une réponse donnée comprennent en outre l'ordre des réponses émises jusque-là par un ou plusieurs dispositifs-clients du second usager, en termes de bifurcation parallèle et/ou de bifurcation séquentielle.

8. Serveur mandataire selon la revendication 6, **caractérisé en ce que** lesdites informations insérées dans une réponse donnée comprennent en outre l'ordre de parcours de la bifurcation à destination des dispositifs-clients du second usager, en termes d'identifiants uniques de ces dispositifs-clients, l'identifiant unique de chacun de ces dispositifs-clients ayant été fourni par ce dispositif-client au serveur mandataire, ou construit pour ce dispositif-client par le serveur mandataire.

9. Serveur mandataire selon l'une quelconque des revendications 5 à 8, **caractérisé en ce qu'**il comprend en outre des moyens pour n'insérer lesdites informations dans lesdites réponses que lorsqu'il constate que ladite requête reçue de la part du premier usager comprend un indicateur dédié dans un en-tête dédié.

10. Serveur mandataire selon l'une quelconque des revendications 5 à 9, **caractérisé en ce que**, ledit réseau IP étant un réseau IP Multimedia Subsystem, IMS, ledit serveur mandataire est un serveur S-CSCF.

11. Système de communication entre un premier usager d'un réseau Internet Protocol, IP, et un second usager dudit réseau IP ayant plusieurs dispositifs-clients connectés au réseau IP, ledit système comprenant :
- au moins un dispositif-client du premier usager comprenant des moyens pour émettre une requête (OPTIONS, SUBSCRIBE) à destination du second usager ; et
- au moins un serveur mandataire du deuxième usager selon l'une quelconque des revendications 5 à 10 ;
ledit dispositif-client du premier usager comprenant des moyens pour prendre en compte dans chaque réponse émise par un dispositif-client du second usager, et transmise par le serveur mandataire au premier usager, au moins les informations suivantes :
• ladite indication, explicite ou implicite, du nombre total de dispositifs-clients du second usager à qui, conformément à une procédure dite de bifurcation, la requête a été transmise, et
• ladite indication, explicite ou implicite, du nombre de réponses émises jusque-là par un ou plusieurs dispositifs-clients du second usager.

12. Système selon la revendication 11 dans lequel lesdites informations prises en compte par le dispositif-client du premier usager dans une réponse donnée comprennent en outre l'ordre de parcours de ladite bifurcation à destination des dispositifs-clients du second usager, en termes de bifurcation parallèle et/ou de bifurcation séquentielle.

13. Système selon la revendication 11 dans lequel lesdites informations prises en compte par le dispositif-client du premier usager dans une réponse donnée comprennent en outre l'ordre des réponses émises jusque-là par les dispositifs-clients du second usager, en termes de bifurcation parallèle et/ou de bifurcation séquentielle.

14. Système selon la revendication 11 dans lequel lesdites informations prises en compte par le dispositif-client du premier usager dans une réponse donnée comprennent en outre l'ordre de parcours de ladite bifurcation à destination des dispositifs-clients du second usager, en termes d'identifiants uniques de ces dispositifs-clients.

15. Système selon la revendication 11 dans lequel ledit dispositif-client du premier usager comprend en outre des moyens pour insérer dans ladite requête un indicateur dédié dans un en-tête dédié, ledit indicateur dédié indiquant que ce dispositif-client comprend lesdits moyens pour prendre en compte lesdites informations.

16. Moyen de stockage de données inamovible, ou partiellement ou totalement amovible, comportant des instructions de code de programme informatique pour l'exécution des étapes d'un procédé de communication selon l'une quelconque des revendications 1 à 4.

17. Programme d'ordinateur téléchargeable depuis un réseau de communications et/ou stocké sur un support lisible par ordinateur et/ou exécutable par un microprocesseur, **caractérisé en ce qu'**il comprend des instructions pour l'exécution des étapes d'un procédé de communication selon l'une quelconque des revendications 1 à 4, lorsqu'il est exécuté sur un ordinateur.

## Patentansprüche

1. Kommunikationsverfahren zwischen einem ersten Nutzer eines Internetprotokoll-/IP-Netzes und einem zweiten Nutzer des IP-Netzes, wobei das Verfahren, wenn der zweite Nutzer mehrere mit dem IP-Netz verbundene Client-Vorrichtungen besitzt, die folgenden Schritte umfasst:
a) eine Client-Vorrichtung des ersten Nutzers sendet (E1, E'1) eine Anforderung (OPTIONS, SUBSCRIBE) an den zweiten Nutzer,
b) ein Proxy-Server des zweiten Nutzers setzt ein Verfahren, Forking-Verfahren genannt, ein, das darin besteht, die Anforderung an alle Client-Vorrichtungen des zweiten Nutzers zu übertragen (E3, E'3),
c) mindestens eine der Client-Vorrichtungen des zweiten Nutzers sendet eine Antwort (E4, E'4) auf die Anforderung des ersten Nutzers und
d) jede der Antworten wird von dem Proxy-Server abgefangen (E5, E'5),
**dadurch gekennzeichnet, dass** es ferner den folgenden Schritt umfasst:
e) der Proxy-Server überträgt (E6, E'6) jede der abgefangenen Antworten an den ersten Nutzer, ohne etwaige weitere Antworten abzuwarten, wobei jede Antwort vom Proxy-Server übertragen wird, nachdem der Proxy-Server in die Antwort mindestens die folgenden Informationen eingefügt hat:
• eine explizite oder implizite Angabe der Gesamtzahl von Client-Vorrichtungen des zweiten Nutzers, an welche die Anforderung beim Schritt b) übertragen worden ist, und
• eine explizite oder implizite Angabe der Anzahl der Antworten, die bis dahin von einer oder mehreren Client-Vorrichtungen des zweiten Nutzers gesendet wurden und von dem Proxy-Server empfangen wurden.

2. Kommunikationsverfahren nach Anspruch 1, **dadurch gekennzeichnet, dass** die in eine bestimmte Antwort eingefügten Informationen ferner die Abarbeitungsreihenfolge des Forkings an Client-Vorrichtungen des zweiten Nutzers, was das parallele Forking und/oder sequenzielle Forking anbelangt, umfassen.

3. Kommunikationsverfahren nach Anspruch 2, **dadurch gekennzeichnet, dass** die in eine bestimmte Antwort eingefügten Informationen ferner die Reihenfolge der bis dahin von einer oder mehreren Client-Vorrichtungen des zweiten Nutzers gesendeten Antworten, was das parallele Forking und/oder sequenzielle Forking anbelangt, umfassen.

4. Kommunikationsverfahren nach Anspruch 2, **dadurch gekennzeichnet, dass** die in eine bestimmte Antwort eingefügten Informationen ferner die Abarbeitungsreihenfolge des Forkings an Client-Vorrichtungen des zweiten Nutzers, was einmalige Kennungen dieser Client-Vorrichtungen anbelangt, umfassen.

5. Proxy-Server, der geeignet ist, in einem Internetprotokoll-/IP-Netz betrieben zu werden, umfassend Einrichtungen, um:
- eine Anforderung (OPTIONS, SUBSCRIBE) zu empfangen, die von einer Client-Vorrichtung eines ersten Nutzers des IP-Netzes an einen zweiten Nutzer des IP-Netzes gesendet wird,
- wenn der zweite Nutzer mehrere mit dem IP-Netz verbundene Client-Vorrichtungen besitzt, ein Verfahren, Forking-Verfahren genannt, einzusetzen, das darin besteht, die Anforderung an alle Client-Vorrichtungen des zweiten Nutzers zu übertragen, und
- jede von einer Client-Vorrichtung des zweiten Nutzers gesendete Antwort auf die Anforderung des ersten Nutzers abzufangen,
**dadurch gekennzeichnet, dass** er ferner Einrichtungen umfasst, um jede der abgefangenen Antworten an den ersten Nutzer zu übertragen, ohne etwaige weitere Antworten abzuwarten, wobei jede Antwort vom Proxy-Server übertragen wird, nachdem der Proxy-Server in die Antwort mindestens die folgenden Informationen eingefügt hat:
• eine explizite oder implizite Angabe der Gesamtzahl von Client-Vorrichtungen des zweiten Nutzers, an welche die Anforderung bei dem Forking-Verfahren übertragen worden ist, und
• eine explizite oder implizite Angabe der Anzahl der Antworten, die bis dahin von einer oder mehreren Client-Vorrichtungen des zweiten Nutzers gesendet wurden und von dem Proxy-Server empfangen wurden.

6. Proxy-Server nach Anspruch 5, **dadurch gekennzeichnet, dass** die in eine bestimmte Antwort eingefügten Informationen ferner die Abarbeitungsreihenfolge des Forkings an Client-Vorrichtungen des zweiten Nutzers, was das parallele Forking und/oder sequenzielle Forking anbelangt, umfassen.

7. Proxy-Server nach Anspruch 6, **dadurch gekennzeichnet, dass** die in eine bestimmte Antwort eingefügten Informationen ferner die Reihenfolge der bis dahin von einer oder mehreren Client-Vorrichtungen des zweiten Nutzers gesendeten Antworten, was das parallele Forking und/oder sequenzielle Forking anbelangt, umfassen.

8. Proxy-Server nach Anspruch 6, **dadurch gekennzeichnet, dass** die in eine bestimmte Antwort eingefügten Informationen ferner die Abarbeitungsreihenfolge des Forkings an Client-Vorrichtungen des zweiten Nutzers, was einmalige Kennungen dieser Client-Vorrichtungen anbelangt, umfassen, wobei die einmalige Kennung jeder dieser Client-Vorrichtungen dem Proxy-Server von dieser Client-Vorrichtung bereitgestellt worden ist oder vom Proxy-Server für diese Client-Vorrichtungen erstellt worden ist.

9. Proxy-Server nach einem der Ansprüche 5 bis 8, **dadurch gekennzeichnet, dass** er ferner Einrichtungen umfasst, um die Informationen nur dann in die Antworten einzufügen, wenn er feststellt, dass die seitens des ersten Nutzers empfangene Anforderung einen dedizierten Indikator in einem dedizierten Header umfasst.

10. Proxy-Server nach einem der Ansprüche 5 bis 9, **dadurch gekennzeichnet, dass**, wenn das IP-Netz ein IP-Multimedia-Subsystem-/IMS-Netz ist, der Proxy-Server ein S-CSCF-Server ist.

11. Kommunikationssystem zwischen einem ersten Nutzer eines Internet-Protokoll-/IP-Netzes und einem zweiten Nutzer des IP-Netzes, der mehrere mit dem IP-Netz verbundene Client-Vorrichtungen besitzt, wobei das System umfasst:
- mindestens eine Client-Vorrichtung des ersten Nutzers, die Einrichtungen zum Senden einer Anforderung (OPTIONS, SUBSCRIBE) an den zweiten Nutzer umfasst, und
- mindestens einen Proxy-Server des zweiten Nutzers nach einem der Ansprüche 5 bis 10;
wobei die Client-Vorrichtung des ersten Nutzers Einrichtungen umfasst, um in jeder Antwort, die von einer Client-Vorrichtung des zweiten Nutzers gesendet wurde und vom Proxy-Server an den ersten Nutzer übertragen wurde, mindestens die folgenden Informationen zu berücksichtigen:
• die explizite oder implizite Angabe der Gesamtzahl von Client-Vorrichtungen des zweiten Nutzers, an welche die Anforderung gemäß einem sogenannten Forking-Verfahren übertragen worden ist, und
• die explizite oder implizite Angabe der Anzahl der Antworten, die bis dahin von einer oder mehreren Client-Vorrichtungen des zweiten Nutzers gesendet wurden.

12. System nach Anspruch 11, bei dem die Informationen, die von der Client-Vorrichtung des ersten Nutzers in einer bestimmten Antwort berücksichtigt werden, ferner die Abarbeitungsreihenfolge des Forkings an Client-Vorrichtungen des zweiten Nutzers, was das parallele Forking und/oder sequenzielle Forking anbelangt, umfassen.

13. System nach Anspruch 11, **dadurch gekennzeichnet, dass** die Informationen, die von der Client-Vorrichtung des ersten Nutzers in einer bestimmten Antwort berücksichtigt werden, ferner die Reihenfolge der bis dahin von einer oder mehreren Client-Vorrichtungen des zweiten Nutzers gesendeten Antworten, was das parallele Forking und/oder sequenzielle Forking anbelangt, umfassen.

14. System nach Anspruch 11, bei dem die Informationen, die von der Client-Vorrichtung des ersten Nutzers in einer bestimmten Antwort berücksichtigt werden, ferner die Abarbeitungsreihenfolge des Forkings an Client-Vorrichtungen des zweiten Nutzers, was einmalige Kennungen dieser Client-Vorrichtungen anbelangt, umfassen.

15. System nach Anspruch 11, bei dem die Client-Vorrichtung des ersten Nutzers ferner Einrichtungen umfasst, um in die Anforderung einen dedizierten Indikator in einen dedizierten Header einzufügen, wobei der dedizierte Indikator angibt, dass diese Client-Vorrichtung die Einrichtungen umfasst, um die Informationen zu berücksichtigen.

16. Nicht entnehmbares oder teilweise oder vollständig entnehmbares Datenspeichermedium, das Computerprogrammcodeanweisungen zum Ausführen der Schritte eines Kommunikationsverfahrens nach einem der Ansprüche 1 bis 4 beinhaltet.

17. Computerprogramm, das über ein Kommunikationsnetz herunterladbar und/oder auf einem computerlesbaren Medium gespeichert ist und/oder von einem Mikroprozessor ausführbar ist, **dadurch gekennzeichnet, dass** es Anweisungen umfasst, die bei seiner Ausführung auf einem Computer die Schritte eines Kommunikationsverfahrens nach einem der Ansprüche 1 bis 4 ausführen.

## Claims

1. Method for communication between a first user of an Internet Protocol, IP, network and a second user of said IP network, said method comprising, when said second user has a plurality of client devices connected to the IP network, the following steps:
a) a client device of said first user sends (E1, E'1) a request (OPTIONS, SUBSCRIBE) to said second user;
b) a proxy server of the second user implements a procedure, called a bifurcation procedure, consisting in transmitting (E3, E'3) said request to all of said client devices of the second user;
c) at least one of the client devices of the second user sends a response (E4, E'4) to the request from the first user; and
d) each of said responses is intercepted (E5, E'5) by said proxy server,
**characterized in that** it further comprises the following step:
e) the proxy server transmits (E6, E'6) each of said intercepted responses to the first user without waiting for potential other responses, each response being transmitted by the proxy server after the proxy server has inserted at least the following information into said response:
• an, explicit or implicit, indication of the total number of client devices of the second user to whom the request has been transmitted in said step b); and
• an, explicit or implicit, indication of the number of responses sent so far by one or more client devices of the second user and received by said proxy server.

2. Communication method according to Claim 1, **characterized in that** said information inserted into a given response further comprise the order in which the bifurcation to the client devices of the second user is run, in terms of parallel and/or sequential bifurcation.

3. Communication method according to Claim 2, **characterized in that** said information inserted into a given response further comprise the order in which the responses have been sent so far by one or more client devices of the second user, in terms of parallel and/or sequential bifurcation.

4. Communication method according to Claim 2, **characterized in that** said information inserted into a given response further comprise the order in which said bifurcation to the client devices of the second user is run, in terms of unique identifiers of these client devices.

5. Proxy server suitable for operating in an Internet Protocol, IP, network, comprising means for:
- receiving a request (OPTIONS, SUBSCRIBE) sent by a client device of a first user of said IP network to a second user of said IP network;
- when said second user has a plurality of client devices connected to the IP network, implementing a procedure, called a bifurcation procedure, consisting in transmitting said request to all of said client devices of the second user; and
- intercepting each response to the request from the first user sent by a client device of the second user,
**characterized in that** it further comprises means for transmitting each of said responses to the first user without waiting for potential other responses, each response being transmitted by the proxy server after the proxy server has inserted at least the following information into said response:
• an, explicit or implicit, indication of the total number of client devices of the second user to whom the request has been transmitted in said bifurcation procedure; and
• an, explicit or implicit, indication of the number of responses sent so far by one or more client devices of the second user and received by said proxy server.

6. Proxy server according to Claim 5, **characterized in that** said information inserted into a given response further comprise the order in which said bifurcation to the client devices of the second user is run, in terms of parallel and/or sequential bifurcation.

7. Proxy server according to Claim 6, **characterized in that** said information inserted into a given response further comprise the order in which the responses have been sent so far by one or more client devices of the second user, in terms of parallel and/or sequential bifurcation.

8. Proxy server according to Claim 6, **characterized in that** said information inserted into a given response further comprise the order in which the bifurcation to the client devices of the second user is run, in terms of unique identifiers of these client devices, the unique identifier of each of these client devices having been provided by this client device to the proxy server, or constructed for this client device by the proxy server.

9. Proxy server according to any one of Claims 5 to 8, **characterized in that** it further comprises means for inserting said information into said responses only when it observes that said request received from the first user comprises a dedicated indicator in a dedicated header.

10. Proxy server according to any one of Claims 5 to 9, **characterized in that**, said IP network being an IP Multimedia Subsystem, IMS, network, said proxy server is an S-CSCF server.

11. System for communication between a first user of an Internet Protocol, IP, network, and a second user of said IP network having a plurality of client devices connected to the IP network, said system comprising:
- at least one client device of the first user comprising means for sending a request (OPTIONS, SUBSCRIBE) to the second user; and
- at least one proxy server of the second user according to any one of Claims 5 to 10,
said client device of the first user comprising means for taking at least the following items of information into account in each response sent by a client device of the second user, and transmitted by the proxy server to the first user:
• said, explicit or implicit, indication of the total number of client devices of the second user to whom, in accordance with what is called a bifurcation procedure, the request has been transmitted; and
• said, explicit or implicit, indication of the number of responses sent so far by one or more client devices of the second user.

12. System according to Claim 11, wherein said information taken into account by the client device of the first user in a given response further comprise the order in which said bifurcation to the client devices of the second user is run, in terms of parallel and/or sequential bifurcation.

13. System according to Claim 11, wherein said information taken into account by the client device of the first user in a given response further comprise the order in which the responses have been sent so far by one or more client devices of the second user, in terms of parallel and/or sequential bifurcation.

14. System according to Claim 11, wherein said information taken into account by the client device of the first user in a given response further comprise the order in which said bifurcation to the client devices of the second user is run, in terms of unique identifiers of these client devices.

15. System according to Claim 11, wherein said client device of the first user further comprises means for inserting a dedicated indicator in a dedicated header into said request, said dedicated indicator indicating that this client device comprises said means for taking said information into account.

16. Irremovable, or partially or completely removable, data storage means including computer program code instructions for executing the steps of a communication method according to any one of Claims 1 to 4.

17. Computer program that is downloadable from a communication network and/or stored on a medium that is readable by computer and/or executable by a microprocessor, **characterized in that** it comprises instructions for executing the steps of a communication method according to any one of Claims 1 to 4, when it is executed on a computer.
